# EUROPEAN PATENT SPECIFICATION

(11) **EP 3 516 926 B1**
(45) Date of publication and mention of the grant of the patent: **15.07.2020**
(21) Application number: 17777344.7
(22) Date of filing: 21.09.2017
(51) Int. Cl.: H05B 3/84

(54) **WIRED LAMINATED WINDOW**
VERDRAHTETES VERBUNDGLASFENSTER
FENÊTRE STRATIFIÉE FILAIRE

(30) Priority: 22.09.2016 GB 201616169
(43) Date of publication of application: 31.07.2019
(73) Proprietor: Pilkington Group Limited, Lancashire L40 5UF (GB)
(72) Inventor: DAY, Stephen Roland, Wigan Greater Manchester WN6 0TB (GB); CHAMBERLAIN, Mark Andrew, Lancashire L40 5UF (GB)
(74) Representative: Denno, Richard Christopher Somer
(86) International application number: PCT/GB2017/052835
(87) International publication number: WO 2018/055390

(56) References cited:
- EP-A1- 1 672 960
- EP-A1- 1 908 584
- WO-A1-00/13468
- WO-A1-2009/087417
- US-A- 5 798 499

## Description

The present invention relates to wired laminated windows, more particularly to electrically heatable wired laminated windows, and to methods for manufacturing wired laminated windows, especially electrically heatable wired laminated windows.

Windows comprising two or more sheets of glazing material, especially glass, laminated together by an interlayer material, often of polyvinyl butyral (PVB), are known. Such windows may be installed as the windscreen, rear window or other window of a car or other vehicle, or as a window (especially the windscreen) of a commercial vehicle, locomotive or aircraft, or in a boat or ship.

Laminated windows, especially those used in vehicles, may have electrically heatable areas. The electrically heatable area is useful to reduce condensation or ice on the surfaces of the window, and thereby maintain good visibility through the window.

Such heatable areas may use transparent conductive coatings on a functional polymer sheet laminated in the glazings as an electrical heating element.

WO-A-00/72635 describes an automotive glazing panel with an electrically heatable solar control coating containing a data transmission window bounded by an electrically conductive band.

US-B-6,559,419 discloses a heatable vehicle window including at least three different heating zones. A conductive coating acting as the heating element is divided into at least three different heatable coating portions which are spaced apart from one another.

US-A-2012/193,341 discloses a window with a large-surface-area, electrically conductive, transparent coating. Two current collector strips are electrically connected to the coating. A locally delimited region is arranged free from the coating as a communication window.

An alternative method of forming an electrically heatable area is to use an array of fine (e.g. having a diameter of less than 150 µm), closely spaced (a wire-to-wire distance of e.g. between 2 mm and 5 mm) wires. The wires in the array are generally substantially straight and may be parallel or fanned with different spacing at the top and bottom of the window.

US-A-5798499 discloses an electrically heating window having a trapezoidal shape, comprising triangular areas at both side portions. In the triangular areas, the window is provided with electrically heating wires having decreasing diameter or increasing spacing in response to decreasing distance between busbars provided at peripheral portions of the window. Thus two effects of melting ice (or de-fogging) in the triangular areas at peripheral portions of the window and wide eyesight for driving are achieved.

It is often necessary to transmit radio wave or microwave signals through windows, especially vehicle windows, so that sensors or emitters positioned on the inside of the window can exchange data outside the window. For example, road tolls may be automatically paid by transmission of signals between devices positioned above the road and within the vehicle interior. Antennas, amplifiers, GPS (global positioning systems) and other toll collection systems all require data signals that are electromagnetic in nature.

The presence of electrically conducting elements in the window may degrade the signal as it passes through the window or even block it altogether. There is, therefore, a need to ensure that it is possible to transmit data through windows containing conductive elements. In addition, occasionally cameras are positioned in windows and need a view outside the window, a view that may be somewhat degraded by heating wires and the effect of the heating of the window.

EP-A-1 672 960 discloses an electrically heated window with an array of fine, closely spaced wires. The window is provided with a wire-free area to permit data to be transmitted through the window.

When using a wire array with a wire-free area, non-uniformity in power density occurs due to differences between the resistances of those wires aligned with or in the wire-free area and those away from the wire-free area. This creates regions of non-uniform temperature and hot spots. Non-uniform heating of a window is undesirable for at least two reasons: firstly, there is a risk that the occupants of a vehicle in which such a window is fitted may touch the window in the region of the one or more hotspots, causing injury. Secondly, non-uniformity in temperature across a window may lead to optical distortion especially in the interlayer.

It would be desirable to produce a wire-heated window, having a wire-free area for data transmission, in which the problems of non-uniform heating are reduced or eliminated.

WO-A-2009/087417 discloses a heatable laminated window with a shaped first electrical connection means to provide a wire-free area as a data transmission window and a second electrical connection means shaped to correspond to the first electrical connection means, such that the heating wires in the array have a substantially constant length.

There is, nevertheless, a need for further solutions to the problems of the wire-free areas and heating uniformity in the prior art. It is an aim of the present invention to address that need.

The present invention according provides, in a first aspect, an electrically heatable window comprising two plies of glazing material, at least one ply of interlayer material located between the plies of glazing material, a first busbar and a second busbar, and an array of spaced wires extending between the first busbar and the second busbar, characterised in that the array of spaced wires comprises a first portion and a second portion, the window comprising a wire-free area aligned with the first portion, and in that the pitch of the wires of the first portion is greater than the pitch of the wires of the second portion. Preferably the average pitch of the wires of the (or each) first portion is greater than the average pitch of the wires of the (or each) second portion. Usually, a length (preferably average length) of the wires of the first portion is shorter than a length (preferably average length) of the wires of the second portion.

Surprisingly, adjusting the pitch of the wires in the portion of the array that aligns with the wire-free area allows much improved heating uniformity, reducing the chance of hotspots and reducing optical distortion that may occur at steep temperature gradients in the window.

The wire-free area may be formed by a shaped portion of the first busbar and/or the second busbar. Preferably, in this case the wire-free area would be outside the first portion, preferably adjacent the edge of the window, more preferably adjacent a long edge of the window (i.e. upper or lower edge of the window when installed in a vehicle, preferably the upper edge).

Alternatively, the wire-free area may be formed by a conductive member in the shape of a continuous loop, for example a busbar ring. Preferably, in this case, the wire-free area is inside the first portion.

There may be two or more wire-free areas. Thus, the window may comprise at least a first wire-free area and a second wire-free area. Generally, the first wire-free area may be aligned with a first portion of the array of wires for the first wire-free area and the second wire-free area may be aligned with a first portion for the array of wires for the second wire-free area. It is preferred that the pitch of the wires of each first portion is greater than the pitch of the wires of the, or each, second portion. Preferably the average pitch of the wires of each first portion is greater than the average pitch of the wires of the, or each, second portion.

Usually, the first busbar and/or the second busbar will comprise metallic foil.

Usually, the conductive member (if present) will comprise metallic foil.

Preferably, the conductive member comprises an upper portion, a lower portion and side portions and the side portions are narrower than the upper and/or lower portions. This is advantageous because it allows for better dissipation of energy in the array, further improving heating uniformity.

Usually, the array of wires will be embedded in the layer of interlayer material, and the first busbar and second busbar are preferably in contact with the ply of interlayer material. This is advantageous because if the array and busbars are inside the laminate, they are better protected from the environment when the window is installed in a vehicle.

The first busbar and second busbar and conductive member (if present) may be formed by generally any suitable method, for example, laser cutting. However, the first busbar and second busbar and conductive member are preferably pre-formed by stamping. Even more preferably the busbars and conductive member are formed by stamping out metal foil that may optionally be provided with an adhesive layer. Usually, the first and second busbars will have a thickness in the range 50 µm to 150 µm, and usually have a width in the range 3 mm to 15 mm.

An advantage of a wire-free area is that the wire-free area allows data to be transmitted through the window to a device positioned in the vicinity of the wire-free area. The device may be selected from a camera, a sensor, an antenna, an amplifier, a signal receiving device or a signal transmitting device.

Preferably, the interlayer material comprises polyvinyl butyral (PVB) which is advantageous because it exhibits good adhesion after lamination to glass and allows the wires to be embedded during manufacture.

The window may comprise two or more (e.g. three, four, five or more) plies of interlayer material, for example two plies or more each of PVB. Such an arrangement may allow the heating of each ply of glazing material to differ depending on the position of the wire in the window (usually embedded in one or other of the interlayer plies or between two interlayer plies).

The window may further comprise a functional polymer ply (e.g. comprising polyethylene terephthalate, PET, preferably having an infrared reflective coating on at least one surface thereof) between the two plies of interlayer material.

The window will preferably further comprise a peripheral obscuration band. Preferably, the wire-free area is concealed by the obscuration band and preferably the first busbar and/or second busbar is/are also concealed by the obscuration band.

Generally, if there is a single wire-free area, the wire fee area and hence the first portion may be located substantially in the centre of the window.

If there are two or more wire-free areas, they may be located in any appropriate part of the window.

The wires of the array are preferably each substantially straight and comprise tungsten. The wires of the array may be crimped, preferably in a pattern selected from sinusoidal, helical, zig-zag or random, which is advantageous because it avoids or reduces dazzling or polarisation effects when an occupant of the vehicle in which the window is installed looks through the window. Usually, the pitch of the wires in the array is in the range 1 mm to 8 mm, preferably 1.4 mm to 6 mm, more preferably 1.7 mm to 5 mm, most preferably 1.8 to 4.5 mm. Preferably the pitch of the wires in the first portion is in the range 160% to 105% of the pitch of the wires in the second portion.

The first portion will usually comprise 3 to 81 wires, preferably 9 to 75 wires, more preferably 19 to 71 wires.

As discussed above, the length of the wires in the first portion is usually shorter than the length of the wires in the second portion. Preferably the length of the wires in the first portion is shorter than the length of the wires in the second portion by 19% or less, more preferably by 14% or less, more preferably by 10% or less. Preferably the length of the wires in the first portion is in the range 81% to 97% of the length of the wires in the second portion.

The increase in pitch/spacing or average pitch/spacing of the wires in the first portion aligned with the wire-free area is thought to be dependent on the reduction in length of the wires in an inverse square relationship.

After assembly of the plies and arranging of the wires in the interlayer material, the laminated window may be made by a lamination process using high pressure and elevated temperature, e.g. in an autoclave.

Thus, in a second aspect the present invention accordingly provides, a method for manufacturing an electrically heatable window, the method comprising,
providing two plies of glazing material,
providing at least one ply of interlayer material
providing a first busbar and a second busbar,
arranging an array of spaced wires so as to extend between the first busbar and the second busbar, and
laminating the window,
characterised in that the array of spaced wires comprises a first portion and a second portion, the window comprising a wire-free area aligned with the first portion, the pitch (preferably average pitch) of the wires of the (or each) first portion is greater than the pitch (preferably average pitch) of the wires of the (or each) second portion. Usually, the length (preferably average length) of the wires of the first portion is shorter than the length (preferably average length) of the wires of the second portion.

The procedure for forming wire heated windows (using the conductive member in a loop, for example a busbar ring, form of wire-free area) usually involves, providing a first busbar and a second busbar, which are applied to the surface of a PVB sheet by locally heating the busbar to bond it to the PVB surface, or alternatively an adhesive film can be applied to one face of the busbar to adhere it to the PVB surface. A "busbar ring" is provided and positioned to surround the wire-free area. The busbar ring may be preferably pre-formed by stamping out the desired shape from a metallic sheet, or formed from folded/individual sections of busbar and may be applied by locally heating the busbar ring to bond it to the PVB surface, or alternatively an adhesive film can be applied to one face of the busbar ring to adhere it to the PVB surface. An array of tungsten wires is applied to the PVB surface over the pre-applied first and second busbar and busbar ring. An additional busbar is applied on top of the first and second busbars and busbar ring to sandwich the tungsten wire. The wires are then removed from within the busbar ring, and connectors are applied to the busbar prior to assembly.

In a third aspect, the invention provides a vehicle having an electrically heated widow according to the first aspect.

The present invention will now be described by way of example only and with reference to the accompanying drawings, in which:
Figure 1 is a schematic plan view of an embodiment of a wire-heated window having a wire-free area;
Figure 2 is a schematic cross-section of a side edge region of the wire-heated window shown in Figure 1;
Figure 3 is a schematic plan view of another embodiment of a wire-heated window having a wire-free area;
Figure 4 is a schematic detail of the wire-free area of the window of Figure 3 showing a wire-free area formed by a busbar ring.
Figure 5 is a schematic plan view of another embodiment of a wire-heated window having a wire-free area; and
Figure 6 is a schematic plan view of a further embodiment of a wire-heated window having two wire-free areas.

In the Figures, the same reference numbers refer to the same or to corresponding features.

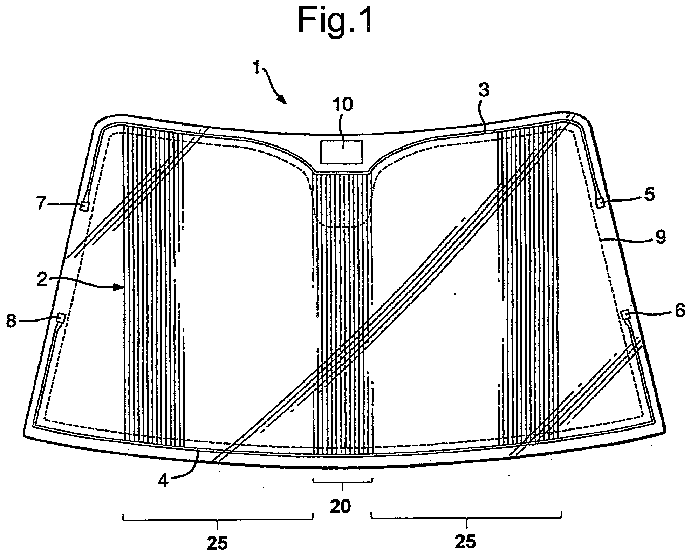

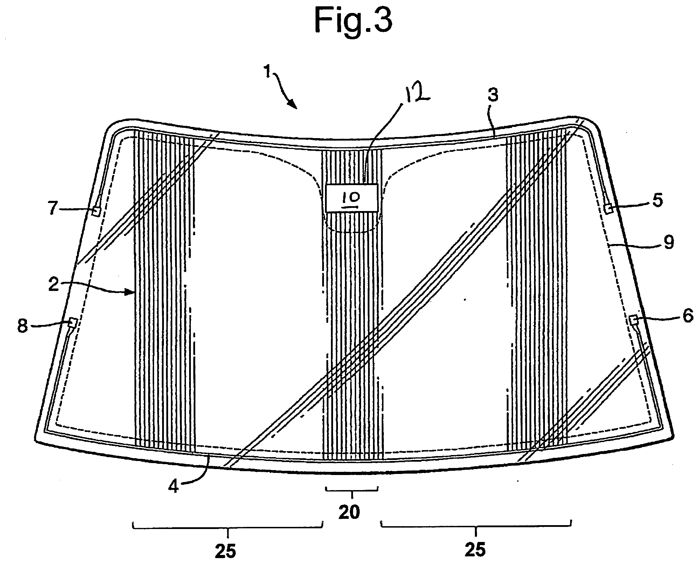

Figure 1 is a schematic plan view of a wire-heated window having a wire-free area. The wire-heated window 1 is generally trapezoidal in shape, and comprises an array 2 of fine, closely-spaced wires of tungsten. Only a small proportion of the wires of the array 2 are shown for clarity. Not all the wires in the array 2 are shown and the variation in pitch of the wires is not shown. The array 2 of wires is bounded by a first electrical connection means or first, upper busbar 3 and a second electrical connection means or second, lower busbar 4. Upper and lower refer to the orientation of the window as illustrated in Figure 1 (and Figure 3) and when the window is installed in the vehicle. The wires within the array 2 extend between the upper and lower busbars 3, 4.

The busbars 3, 4 electrically connect the array to an electrical supply (not shown) by means of electrical connectors 5, 6, 7, 8, which may be plug connectors or other suitable connectors.

The window 1 has an obscuration band (formed of black pigment in a glass frit) and fired on to the surface of one of the glass plies during assembly. A dotted line 9 represents the extent to which the periphery of the window is covered by the obscuration band. The obscuration band acts to hide the edge of the window and cover the adhesive used to bond the window into a vehicle, as well as the frame surrounding the window aperture and acts to prevent degradation of the adhesive used to bond the window into the vehicle which may otherwise occur due to exposure to UV rays in sunlight. Ideally, the wire-free area 10, busbars 3, 4 and connectors 5, 6, 7, 8 are concealed by the obscuration band.

The wire-free area 10 is located adjacent the top edge of the window 1 (when fitted into a vehicle). The upper bus bar 3 is shaped so as to define the wire-free area 10 to allow a data signal to be transmitted through the window to a device positioned in the vicinity of the wire-free area. The shaped, upper busbar 3 has the effect that the wires in a first portion 20 of the array 2 are shorter than the wires in a second portion 25 of the array (i.e. those wires not shortened by the need to provide the wire-free area 10). The first portion 20 of the array of wires 2 is aligned on the window with the wire-free area 10.

A second portion distance between the upper busbar 3 running along the top edge of the window 1 and the lower busbar 4 running along the bottom edge of the window in an edge region of the window 1 (which would be adjacent an "A" pillar when fitted in a vehicle) and hence a length of the wires of the second portion 25 of the array is greater than a first portion distance between the upper busbar 3 and the lower busbar 4.

Typically, the first portion distance is about 10% shorter than the second portion distance. The length of the wires of the first portion 20 may be about 10% shorter than the length of the wires of the second portion 25. This leads to the first portion 20 having an increased temperature in comparison with the remainder of the window due to the decrease in resistance of the wires in the first portion 20 and consequential increase heating power at the same potential difference. The wire-free area may be up to 300 mm in width (and approximately 80 to 200 mm in length, i.e. height dimension of window), and can result in significant differences in temperature which may affect the safety of occupants of the vehicle and may cause optical distortion in the interlayer material 15. It may be necessary to shape the upper busbar 3 up to 150 - 200 mm to provide a wire-free area of this approximate size depending on the windscreen size and the position of the wire-free sensor area.

Surprisingly, the inventors of the present invention have found that by increasing the pitch (i.e. distance between each wire) of the wires in the first portion 20 heating uniformity may be significantly improved. Generally, if the wires in the first portion 20 of the array aligned with the wire-free area 10 are shorter than the wires in the second portion 25, the pitch of the wires in the first portion would be increased by a suitable amount compared to the pitch of the wires in the second portion 25. Neither pitch nor variation in pitch is illustrated to scale in Figure 1 nor Figure 3.

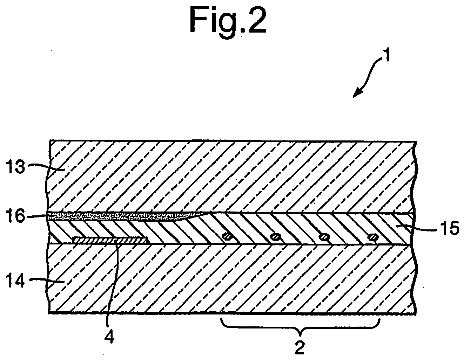

Figure 2 is a schematic cross-section of a side edge region of the wire heated window shown in Figure 1. The window 1 comprises first glass ply 13 and second glass ply 14 of annealed soda lime silica float glass having a ply of polyvinyl butyral (PVB) interlayer material 15 extending and sandwiched between the two glass plies 13, 14. The obscuration band 16 is provided around the periphery of the window 1, obscuring lower busbars 4. The wires in the array 2 are substantially parallel with the edge of the window 1 and substantially straight (as also illustrated in Figures 1 and 3).

Figure 3 is a schematic plan view of a wire-heated window having a different form of wire-free area 10 to that illustrated in Figure 1. As in Figure 1, the wire-heated window 1 is generally trapezoidal in shape, and comprises an array of fine, closely-spaced wires 2, of which only a small proportion are shown for clarity. Not all the wires in the array 2 are shown and the variation in pitch of the wires is not shown. The array of wires 2 is bounded by a first electrical connection means or first, upper busbar 3 and a second electrical connection means or second, lower busbar 4. The wires within the array 2 extend between the upper and lower busbars 3, 4. The busbars 3, 4 electrically connect the array to an electrical supply (not shown) by means of connectors 5, 6, 7, 8, which may be plug connectors or other suitable connectors.

The window 1 has an obscuration band (formed of black pigment in a glass frit) and fired on to the surface of one of the glass plies during assembly. A dotted line 9 represents the extent to which the periphery of the window is covered by the obscuration band.

The wire-free area 10 in Figure 3 is located inside the array of wires 2 and is formed by a conductive member 12 or "busbar ring" inserted into the array 2 and embedded in the interlayer material 15 and situated slightly lower that the wire-free area 10 of Figure 1 away from the top edge of the window 1 (when fitted into a vehicle). The upper busbar 3 is not specifically shaped; instead it follows a curve that is generally parallel to the upper edge of the laminated window 1 and the lower busbar 4.

The conductive member 12, which may be formed of metallic foil, defines the wire-free area 10 to allow a data signal to be transmitted through the window to a device positioned in the vicinity of the wire-free area. The presence of the conductive member 12 has the effect that the wires in a first portion 20 (aligned with the conductive member 12 and wire-free area 10) of the array 2 are shorter than the wires in a second portion 25 of the array (i.e. those wires not shortened by the need to provide the wire-free area 10).

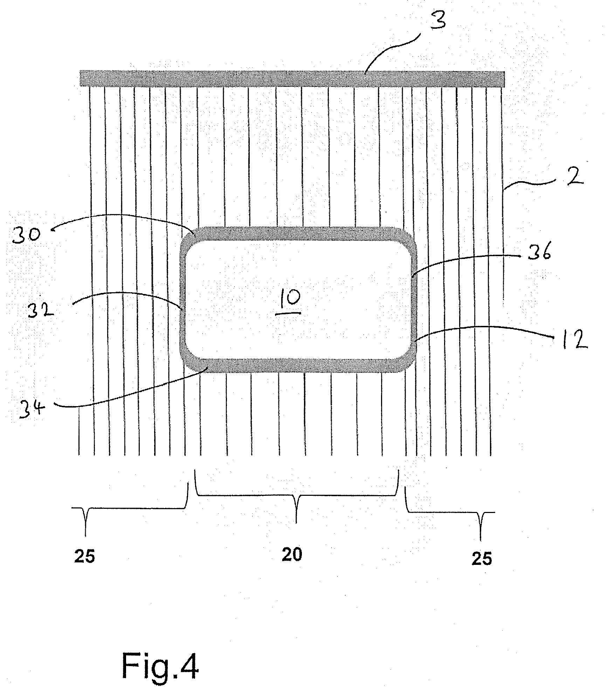

Figure 4 illustrates a schematic detail of the wire-free area 10 and conductive member 12 of the window 1 of Figure 3. The conductive member 12 has upper 30 and lower edges 34 somewhat wider than the side edges 32, 36. The conductive member 12 is the length (i.e. height dimension) of the desired wire-free area 10 (typical 60 - 80 mm in length, i.e. height). The upper 30 and lower edges 34 of the conductive member 12 may be 6 mm wide. The narrow side edges 32, 36 (e.g. of width 2.5 mm), better dissipate the energy that would have been used to heat the missing wires from within the busbar ring. The conductive member 12 therefore reduces the effective wire length of the first portion 20 less than in the embodiment in Figure 1. Whilst this design gives better heating uniformity than the embodiment in Figure 1 it is still not possible to match the original wire resistance (and heating level) in this area without the temperature getting too hot (typical limit of 70°C) so there still remains some non-uniformity in the heating level comparing the wire-free zone and remaining adjacent circuit.

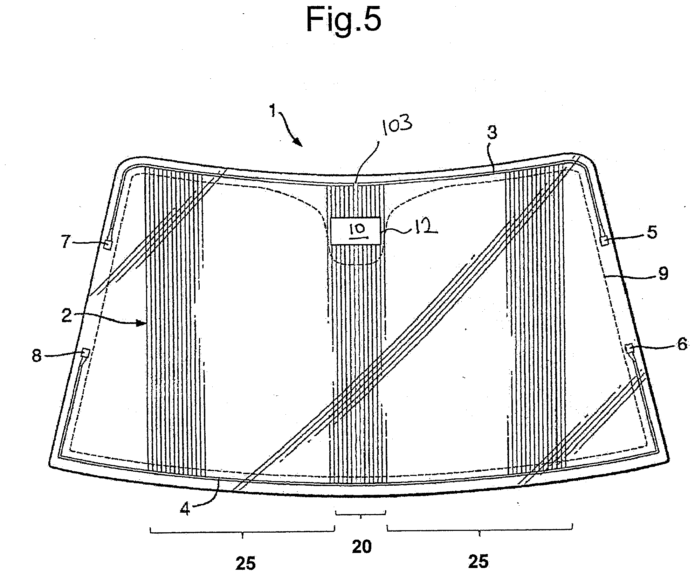

Figure 5 is a schematic plan view of a wire-heated window very similar to that illustrated in Figure 3. As in Figure 3, the wire-heated window 1 is generally trapezoidal in shape, and comprises an array of fine, closely-spaced wires 2, of which only a small proportion are shown for clarity. The variation in pitch of the wires 2 is not shown. The array of wires 2 is bounded by a first electrical connection means or first, upper busbar 3 and a second electrical connection means or second, lower busbar 4. The busbars 3, 4 electrically connect the array to an electrical supply (not shown) by means of connectors 5, 7 to the upper busbar 3 and connectors 6, 8 to the lower busbar 4. The connectors may be plug connectors or other suitable connectors.

To further improve the heating uniformity in wire-free area 10 the wire pitch/spacing of the tungsten wires in the area (above/below) the wire-free zone is increased in a first portion 20 (aligned with the conductive member 12 and wire-free area 10) of the array 2 compared to the pitch/spacing of the wires in a second portion 25 of the array.

The wire-heated window of Figure 5 differs from that of Figure 3 in that the first, upper busbar 3 comprises a gap 103 so that the left and right (referring to the orientation of the window 1 as illustrated) portions of the upper busbar 2 are separated.

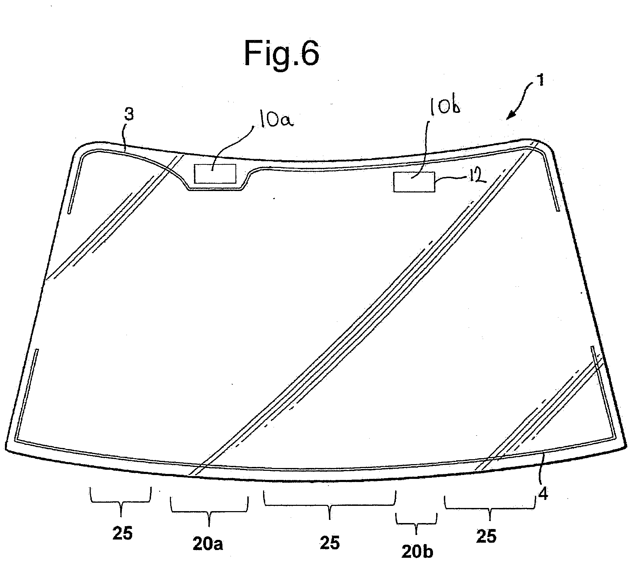

Figure 6 is a schematic plan view of a wire-heated window having two wire-free areas: a first wire-free area 10a and a second wire-free area 10b. As in the embodiments illustrated in Figures 1, 3 and 5, the wire-heated window 1 is generally trapezoidal in shape, and comprises an array of fine, closely-spaced wires of tungsten. In Figure 6 the wires of the array are not shown to improve clarity. The array of wires is bounded by a first electrical connection means or first, upper busbar 3 and a second electrical connection means or second, lower busbar 4. Upper and lower refer to the orientation of the window as illustrated and when the window is installed in the vehicle.

The first wire-free area 10a is located adjacent the top edge of the window 1 (when fitted into a vehicle). The upper bus bar 3 is shaped so as to define the wire-free area 10a to allow a data signal to be transmitted through the window to a device positioned in the vicinity of the wire-free area. The shaped, upper busbar 3 has the effect that the wires in a first portion 20 of the array aligned with the first wire-free area are shorter than the wires in a second portion 25 of the array (i.e. those wires not shortened by the need to provide the wire-free areas 10a or 10b).

The pitch of the wires in the first portion 20a aligned with the first wire-free area 10a is greater than the pitch of the wires in a second portion 25 (where the wires are not aligned with the first 10a nor second 10b wire-free areas) and thus significantly improves heating uniformity.

The second wire-free area 10b in Figure 6 is located inside the array of wires and is formed by a conductive member 12 and situated slightly lower that the first wire-free area 10a away from the top edge of the window 1 (when fitted into a vehicle). The upper busbar 3 is not specifically shaped in the region of the second wire-free area; instead it follows a curve that is generally parallel to the upper edge of the laminated window 1.

The pitch of the wires in the first portion 20b aligned with the second wire-free area 10b is greater than the pitch of the wires in a second portion 25 (where the wires are not aligned with the first 10a nor second 10b wire-free areas) and thus significantly improves heating uniformity.

Although two wire-free areas are shown in Figure 6, there may be three, four, five or more wire-free areas in the window.

The invention is further illustrated by the following examples.

Example 1 and Example 2 are designs of window having a single wire-free area with the size of the wire-free area and electrical parameters as indicated in Table 1. Also indicated in Table 1 is the spacing of the wires (pitch) for the first portions of the array aligned with the wire-free areas. The portions of the array (second portions) outside the wire-free area have the parameters in Table 1.

**Table 1**

| | Example 1 first portion | Example 2 first portion | Examples 1, 2 second portion |
|---|---|---|---|
| | | | |
| Volts | 13 | 13 | 13 |
| Length (m) | 0.648 | 0.776 | 0.8 |
| Length / second portion | 81% | 97% | 100% |
| Wire Resistance/m | 156.25 | 156.25 | 156.25 |
| Power per wire (W) | 1.669136 | 1.393814 | 1.352 |
| Width of Portion (m) | 0.15 | 0.15 | 0.5 |
| Area of Portion (m2) | 0.0972 | 0.1164 | 0.4 |
| Power needed to achieve 600W/m² (W) | 58.32 | 69.84 | 240 |
| Wires Needed | 34.94024 | 50.1071 | 177.5147929 |
| Wire Spacing (m) | 0.004293 | 0.002994 | 0.002816667 |
| Pitch / second portion | 152.4% | 106.3% | 100% |

Example 3 is a design of window having a single wire-free area with the size of the wire-free area and electrical parameters as indicated in Table 2. Also indicated in Table 2 is the spacing of the wires (pitch) for the first portions of the array aligned with the wire-free areas. The portions of the array (second portion outside the wire-free area have the parameters indicated in Table 2.

**Table 2**

| | Example 3 first portion | Example 3 second portion |
|---|---|---|
| | | |
| Volts | 13 | 13 |
| Length (m) | 0.9 | 1 |
| Length / second portion | 90% | 100% |
| Wire Resistance/m | 156.25 | 156.25 |
| Power per wire (W) | 1.201778 | 1.0816 |
| Width of Portion (m) | 0.15 | 0.5 |
| Area of Portion (m2) | 0.135 | 0.5 |
| Power needed to achieve 600W/m² (W) | 81 | 300 |
| Wires Needed | 67.40015 | 277.3668639 |
| Wire Spacing (m) | 0.002226 | 0.001802667 |
| Pitch / second portion | 123.5% | 100% |

In each of Example 1, 2 and 3 the increasing in spacing of the wires in the first portion aligned with the wire-free area significantly improves heating uniformity. The increase in spacing of the wires is thought to be dependent on the reduction in length of the wires in the first portion aligned with the wire-free area in an inverse square relationship.

Thermal images show heating uniformity on parts with a wire-free area at the top centre-line, but no variation in wire pitch. The heating uniformity on the design with the conductive member 12 is better than with the shaped busbar 3.

### Reference Numerals

- 1: Wired laminated window
- 2: Array of spaced wires
- 3: First, upper busbar
- 4: Second, lower busbar
- 5: Electrical connector
- 6: Electrical connector
- 7: Electrical connector
- 8: Electrical connector
- 9: Extent of obscuration band
- 10: Wire-free area
- 10a: First Wire-free area
- 10b: Second Wire-free area
- 12: Conductive Member
- 13: First glass ply
- 14: Second glass ply
- 15: Interlayer material
- 16: Obscuration band
- 20: First portion of array
- 20a: First portion of array for first wire-free area
- 20b: First portion of array for second wire-free area
- 25: Second portion of array
- 30: Upper edge of conductive member
- 32: Side edge of conductive member
- 34: Lower edge of conductive member
- 36: Side edge of conductive member
- 103: Gap in first, upper busbar

## Claims

1. An electrically heatable window comprising
two plies of glazing material (13,14), at least one ply of interlayer material (15) located between the plies of glazing material,
a first busbar (3) and a second busbar (4), and
an array of spaced wires (2) extending between the first busbar and the second busbar,
**characterised in that** the array of spaced wires comprises a first portion (20) and a second portion (25), the window comprising a wire-free area (10) aligned with the first portion, and **in that** the pitch of the wires of the first portion is greater than the pitch of the wires of the second portion.

2. An electrically heatable window as claimed in claim 1, wherein the wire-free area is to allow data to be transmitted through the window to a device positioned in the vicinity of the wire-free area.

3. An electrically heatable window as claimed in any one of the preceding claims, wherein the wire-free area is formed by a shaped portion of the first busbar and/or the second busbar.

4. An electrically heatable window as claimed in any one of the preceding claims, wherein the wire-free area is outside the first portion, preferably adjacent the edge of the window, more preferably adjacent a long edge of the window.

5. An electrically heatable window as claimed in any one of claims 1 to 3, wherein the wire-free area is formed by a conductive member in the shape of a continuous loop and the wire-free area is inside the first portion.

6. An electrically heatable window as claimed in any one of the preceding claims, wherein the window comprises at least a first wire-free area and a second wire-free area.

7. An electrically heatable window as claimed in claim 6, wherein the first wire-free area is aligned with a first portion for the first wire-free area (20a) and the second wire-free area is aligned with a first portion for the second wire-free area (20b).

8. An electrically heatable window as claimed in any one of the preceding claims, wherein the first busbar and/or the second busbar comprise metallic foil.

9. An electrically heatable window as claimed in any one of claims 5 to 8, wherein the conductive member comprises metallic foil.

10. An electrically heatable window as claimed in any one of claims 5 to 9, wherein the conductive member comprises an upper portion, a lower portion and side portions and the side portions are narrower than the upper and/or lower portions.

11. An electrically heatable window as claimed in any one of the preceding claims, wherein the pitch of the wires in the array is in the range 1 mm to 8 mm, preferably 1.4 mm to 6 mm, more preferably 1.7 mm to 5 mm, most preferably 1.8 to 4.5 mm.

12. An electrically heatable window as claimed in any one of the preceding claims, wherein the length of the wires of the first portion is in the range 81 to 97% of the length of the wires of the second portion.

13. An electrically heatable window as claimed in any one of the preceding claims, wherein the pitch of the wires of the first portion is in the range 160% to 105% of the pitch of the wires of the second portion.

14. A method for manufacturing an electrically heatable window, the method comprising,
providing two plies of glazing material,
providing at least one ply of interlayer material
providing a first busbar and a second busbar,
arranging an array of spaced wires so as to extend between the first busbar and the second busbar, and
laminating the window,
**characterised in that** the array of spaced wires comprises a first portion and a second portion, the window comprising a wire-free area aligned with the first portion, and **in that** the pitch of the wires of the first portion is greater than the pitch of the wires of the second portion.

15. A vehicle comprising an electrically heated window as claimed in any one of claims 1 to 13.

## Patentansprüche

1. Elektrisch beheizbares Fenster, das umfasst:
zwei Lagen Verglasungsmaterial (13:14),
mindestens eine Lage Zwischenschichtmaterial (15), die zwischen den Lagen des Verglasungsmaterials angeordnet ist,
eine erste Sammelschiene (3) und eine zweite Sammelschiene (4), und
eine Anordnung von beabstandeten Drähten (2), die sich zwischen der ersten Sammelschiene und der zweiten Sammelschiene erstrecken,
**dadurch gekennzeichnet, dass** die Anordnung von beabstandeten Drähten einen ersten Abschnitt (20) und einen zweiten Abschnitt (25) umfasst, wobei das Fenster einen drahtfreien Bereich (10) umfasst, der mit dem ersten Abschnitt ausgerichtet ist, und dass der Abstand der Drähte des ersten Abschnitts größer als der Abstand der Drähte des zweiten Abschnitts ist.

2. Elektrisch beheizbares Fenster nach Anspruch 1, bei dem der drahtfreie Bereich die Übertragung von Daten durch das Fenster zu einer in der Nähe des drahtfreien Bereichs angeordneten Vorrichtung ermöglichen soll.

3. Elektrisch beheizbares Fenster nach einem der vorhergehenden Ansprüche, bei dem der drahtfreie Bereich durch einen geformten Abschnitt der ersten Sammelschiene und/oder der zweiten Sammelschiene gebildet ist.

4. Elektrisch beheizbares Fenster nach einem der vorhergehenden Ansprüche, bei dem der drahtfreie Bereich außerhalb des ersten Abschnitts, vorzugsweise benachbart zum Rand des Fensters, noch bevorzugter benachbart zu einer langen Kante des Fensters liegt.

5. Elektrisch beheizbares Fenster nach einem der Ansprüche 1 bis 3, bei dem der drahtfreie Bereich durch ein leitfähiges Element in Form einer Endlosschleife gebildet ist und der drahtfreie Bereich sich innerhalb des ersten Abschnitts befindet.

6. Elektrisch beheizbares Fenster nach einem der vorhergehenden Ansprüche, bei dem das Fenster mindestens einen ersten drahtfreien Bereich und einen zweiten drahtfreien Bereich umfasst.

7. Elektrisch beheizbares Fenster nach Anspruch 6, bei dem der erste drahtfreie Bereich mit einem ersten Abschnitt für den ersten drahtfreien Bereich (20a) ausgerichtet ist und der zweite drahtfreie Bereich mit einem ersten Abschnitt für den zweiten drahtfreien Bereich (20b) ausgerichtet ist.

8. Elektrisch beheizbares Fenster nach einem der vorhergehenden Ansprüche, bei dem die erste Sammelschiene und/oder die zweite Sammelschiene eine Metallfolie umfasst.

9. Elektrisch beheizbares Fenster nach einem der Ansprüche 5 bis 8,
bei dem das leitfähige Element eine Metallfolie umfasst.

10. Elektrisch beheizbares Fenster nach einem der Ansprüche 5 bis 9,
bei dem das leitfähige Element einen oberen Abschnitt, einen unteren Abschnitt und Seitenabschnitte umfasst und die Seitenabschnitte schmaler als die oberen und/oder unteren Abschnitte sind.

11. Elektrisch beheizbares Fenster nach einem der vorhergehenden Ansprüche, bei dem der Abstand der Drähte in der Anordnung im Bereich von 1 mm bis 8 mm, vorzugsweise 1,4 mm bis 6 mm, besonders bevorzugt 1,7 mm bis 5 mm, am meisten bevorzugt 1,8 bis 4,5 mm, liegt.

12. Elektrisch beheizbares Fenster nach einem der vorstehenden Ansprüche, bei dem die Länge der Drähte des ersten Abschnitts im Bereich von 81 bis 97% der Länge der Drähte des zweiten Abschnitts liegt.

13. Elektrisch beheizbares Fenster nach einem der vorhergehenden Ansprüche, bei dem der Abstand der Drähte des ersten Abschnitts im Bereich von 160% bis 105% des Abstands der Drähte des zweiten Abschnitts liegt.

14. Verfahren zur Herstellung eines elektrisch beheizbaren Fensters, wobei das Verfahren umfasst:
Bereitstellen von zwei Lagen Verglasungsmaterial,
Bereitstellen von mindestens einer Lage Zwischenschichtmaterial, das eine erste Sammelschiene und eine zweite Sammelschiene bildet,
Anordnen einer Anordnung von beabstandeten Drähten, so dass sie sich zwischen der ersten Sammelschiene und der zweiten Sammelschiene erstrecken, und
Laminieren des Fensters,
**dadurch gekennzeichnet, dass** die Anordnung von beabstandeten Drähten einen ersten Abschnitt und einen zweiten Abschnitt umfasst, wobei das Fenster einen drahtfreien Bereich umfasst, der mit dem ersten Abschnitt ausgerichtet ist, und dass der Abstand der Drähte des ersten Abschnitts größer als der Abstand der Drähte des zweiten Abschnitts ist.

15. Fahrzeug mit einem elektrisch beheizbaren Fenster nach einem der Ansprüche 1 bis 13.

## Revendications

1. Fenêtre pouvant être chauffée électriquement comprenant
deux épaisseurs de matériau de vitrage (13, 14),
au moins une épaisseur de matériau de couche intermédiaire (15) située entre les épaisseurs de matériau de vitrage
une première barre omnibus (3) et une seconde barre omnibus (4), et
un réseau de fils espacés (2) s'étendant entre la première barre omnibus et la seconde barre omnibus,
**caractérisée en ce que** le réseau de fils espacés comprend une première partie (20) et une seconde partie (25), la fenêtre comprenant une zone sans fil (10) alignée avec la première partie, et **en ce que** le pas des fils de la première partie est supérieur au pas des fils de la seconde partie.

2. Fenêtre pouvant être chauffée électriquement selon la revendication 1, dans laquelle la zone sans fil doit permettre la transmission de données à travers la fenêtre vers un dispositif positionné à proximité de la zone sans fil.

3. Fenêtre pouvant être chauffée électriquement selon l'une quelconque des revendications précédentes, dans laquelle la zone sans fil est formée par une partie conformée de la première barre omnibus et/ou de la seconde barre omnibus.

4. Fenêtre pouvant être chauffée électriquement selon l'une quelconque des revendications précédentes, dans laquelle la zone sans fil est à l'extérieur de la première partie, de préférence adjacente au bord de la fenêtre, de manière davantage préférée adjacente à un bord long de la fenêtre.

5. Fenêtre pouvant être chauffée électriquement selon l'une quelconque des revendications 1 à 3, dans laquelle la zone sans fil est formée par un élément conducteur sous la forme d'une boucle continue, et la zone sans fil est à l'intérieur de la première partie.

6. Fenêtre pouvant être chauffée électriquement selon l'une quelconque des revendications précédentes, dans laquelle la fenêtre comprend au moins une première zone sans fil et une seconde zone sans fil.

7. Fenêtre pouvant être chauffée électriquement selon la revendication 6, dans laquelle la première zone sans fil est alignée avec une première partie pour la première zone sans fil (20a), et la seconde zone sans fil est alignée avec une première partie pour la seconde zone sans fil (20b).

8. Fenêtre pouvant être chauffée électriquement selon l'une quelconque des revendications précédentes, dans laquelle la première barre omnibus et/ou la seconde barre omnibus comprennent une feuille métallique.

9. Fenêtre pouvant être chauffée électriquement selon l'une quelconque des revendications 5 à 8, dans laquelle l'élément conducteur comprend une feuille métallique.

10. Fenêtre pouvant être chauffée électriquement selon l'une quelconque des revendications 5 à 9, dans laquelle l'élément conducteur comprend une partie supérieure, une partie inférieure et des parties latérales, et les parties latérales sont plus étroites que les parties supérieure et/ou inférieure.

11. Fenêtre pouvant être chauffée électriquement selon l'une quelconque des revendications précédentes, dans laquelle le pas des fils dans le réseau se situe dans la plage de 1 mm à 8 mm, de préférence de 1,4 mm à 6 mm, de manière davantage préférée de 1,7 mm à 5 mm, de manière préférée entre toutes de 1,8 à 4,5 mm.

12. Fenêtre pouvant être chauffée électriquement selon l'une quelconque des revendications précédentes, dans laquelle la longueur des fils de la première partie se situe dans la plage de 81 à 97 % de la longueur des fils de la seconde partie.

13. Fenêtre pouvant être chauffée électriquement selon l'une quelconque des revendications précédentes, dans laquelle le pas des fils de la première partie se situe dans la plage de 160 % à 105 % du pas des fils de la seconde partie.

14. Procédé de fabrication d'une fenêtre pouvant être chauffée électriquement, le procédé comprenant :
la fourniture de deux épaisseurs de matériau de vitrage,
la fourniture d'au moins une épaisseur de matériau de couche intermédiaire la fourniture d'une première barre omnibus et d'une seconde barre omnibus,
l'agencement d'un réseau de fils espacés de manière à s'étendre entre la première barre omnibus et la seconde barre omnibus, et
la stratification de la fenêtre,
**caractérisé en ce que** le réseau de fils espacés comprend une première partie et une seconde partie, la fenêtre comprenant une zone sans fil alignée avec la première partie, et **en ce que** le pas des fils de la première partie est supérieur au pas des fils de la seconde partie.

15. Véhicule comprenant une fenêtre chauffée électriquement selon l'une quelconque des revendications 1 à 13.
